# EUROPEAN PATENT APPLICATION

(11) **EP 4 421 703 A1**
(43) Date of publication of application: **28.08.2024**
(21) Application number: 24157662.8
(22) Date of filing: 14.02.2024
(51) Int. Cl.: G06Q 10/0832, G06Q 10/083

(54) **DEVICE AND METHOD FOR AUTHORIZING AND ENABLING PHYSICAL ACCESS TO CONTENTS OF A TRANSPORT CONTAINER**

(30) Priority: 22.02.2023 CH 1742023
(71) Applicant: Legic Identsystems Ag, 8620 Wetzikon (CH)
(72) Inventor: Fitze, Anthony, 8330 Pfäffikon ZH (CH)
(74) Representative: Rentsch Partner AG

(57) **Abstract**

An access control device (1) attachable to a transport container (3) and an access control method are disclosed, the access control device (1) configured to: receive, from an electronic key device (2), an authorization query, verify the authorization query to determine whether the electronic key device (2) is authorized; determine a current geolocation of the access control device (1), a measured environmental parameter of the internal or external environment of the transport container (3), and/or current status information of the transport container (3); verify whether the one or more current parameters satisfy stored access conditions, the stored access conditions including geolocation conditions, an environmental condition, and/or a container status condition; generate an access authorization signal upon affirmative verification of the authorization query and the current parameters; and transmit, via the electronic communications interface, the access authorization signal to an actuator for enabling physical access to contents of the transport container (3).

## Description

### FIELD OF THE DISCLOSURE

The present invention relates to a device and method for authorizing and enabling physical access to contents of a transport container.

### BACKGROUND OF THE DISCLOSURE

Transport containers, for example intermodal standardized shipping containers for freight transport, have revolutionized global freight as they can be easily handled, moved, and will pack tightly in a ship or yard and can further be transported by rail or road. Additionally, they are suited for varying types of cargo. There are many variations on the common shipping container, including refrigerated containers for perishable goods, ventilated containers, general temperature controlled (including heated) containers, as well as containers specialized for dangerous goods such as flammable or explosive liquids, gasses, or powders. These transport containers are standardized in ISO 6346 and ISO 668, for example.

For security purposes, such as to prevent theft, transport containers are often locked, as they are often left unattended outdoors in yards. These locks may be combination locks or locks (e.g. a padlock) which are unlocked using a specific physical key. Additionally, electronic container locks are known which can automatically lock and seal a container. The electronic locks may be unlocked using a transponder or PIN code.

Additionally, transport containers may be sealed, for example various customs authorities require the use of an ISO 17712:2013 certified container seal. These seals may additionally be protected, using a so-called seal protector lock.

Depending on the requirements, the transport container may further include means for monitoring an internal temperature to ensure that the cargo has not experienced adverse temperatures which may compromise the cargo.

### SUMMARY OF THE DISCLOSURE

It is an object of the invention and embodiments disclosed herein to provide a device and method for authorizing and enabling physical access to contents of a transport container.

In particular, it is an object of the invention and embodiments disclosed herein to provide a method and device for authorizing and enabling physical access to contents of a transport container which does not have at least some of the disadvantages of the prior art.

The present disclosure relates to an access control device attachable to a transport container. The access control device comprises an electronic circuit comprising a processing unit, a memory configured to store access conditions, a wireless communications module configured for short-range communication, and an electronic communications interface. The access control device is configured to receive, using the wireless communications module, from an electronic key device, an authorization query. The access control device is configured to verify, using key authorization rights included in the access conditions, the authorization query to determine whether the electronic key device is authorized. The access control device is configured to determine a current parameter(s) including a current geolocation of the access control device, a measured environmental parameter of the internal or external environment of the transport container, and/or current status information of the transport container. The status information may be indicative of a current logistics status of the transport container and/or an internal status of the transport container. The access control device is configured to verify whether the one or more current parameters satisfy the stored access conditions, the stored access conditions including geolocation conditions, an environmental condition, and/or a container status condition. The access control device is configured to generate an access authorization signal upon affirmative verification of the authorization query and the current parameters. The access control device is configured to transmit, via the electronic communications interface, the access authorization signal to an actuator for enabling physical access to contents of the transport container.

In an embodiment, the access control device is configured to determine one or more current parameters including a current geolocation of the access control device or a measured environmental parameter of the external environment of the transport container.

In an embodiment, the access control device is configured to verify whether the one or more current parameters satisfy the stored access conditions, the stored access conditions including geolocation conditions or an environmental condition.

In an embodiment, the measured environmental parameter(s) is received from a sensor system.

The environmental conditions may include a temperature and/or a humidity. The environmental conditions may further include a barometric pressure, an irradiation (e.g. a solar and/or thermal irradiation), a noise level, a motion of the access control device and/or of the transport container, a presence and/or concentration of particular gasses, and/or an orientation of the access control device and/or the transport container. The environmental conditions in general may include any environmental conditions measured by the sensor system.

In an embodiment, the sensor system is integrated into the access control device. The sensor system may alternatively be arranged externally to the access control device in whole or in part. The sensor system may further be configured to measure an environment outside and/or inside the transport container.

The status condition of the transport container may include an internal status of the transport container, for example include an indication of whether the transport container is open, closed, locked, and/or unlocked. The internal status of the transport container may further include whether it is empty, filled, or partially filled. The internal status of the container may include a current time. Further, the status condition may include a logistics status indicating that the container is ready in a pool, that the container is currently being loaded, that the container is currently in transit, that the container has arrived at a destination, and/or that the container is in refurbishment, for example.

In an embodiment, the wireless communications module is configured for short-range wireless communication using one or more of the following technologies: Bluetooth, RFID, NFC, or UWB.

In an embodiment, the processing unit is configured to generate an alarm signal upon negative verification of the authorization query, the alarm signal including an identifier of the access control device and an address of a cloud-based server. The processing unit is configured to transmit, using the wireless communications module, the alarm signal to the electronic key device, for forwarding to the cloud-based server using the address.

In an embodiment, the access control device further comprises a hardware secure element connected to the processing unit and configured to securely store a cryptographic key. The processing unit is further configured to receive, using the wireless communications module, an encrypted access condition update package from a mobile communication device. The encrypted access condition update package was generated by a cloud-based server and forwarded to the mobile communication device. The encrypted access condition update package includes updated access conditions. The processing unit is configured to decrypt the encrypted access condition update package using the cryptographic key stored securely in the hardware secure element. The processing unit is configured to store, in the memory, the received updated access conditions.

In an embodiment, the processing unit is configured to transfer the encrypted access condition update package to the hardware secure element. The hardware secure element is configured to decrypt the encrypted access condition update package in the hardware secure element using the cryptographic key stored securely in the hardware secure element. The processing unit is configured to transfer the updated access conditions included in the access condition update package to the memory.

In an embodiment, the processing unit is configured to determine the current geolocation using location information received, via the electronic communications interface, from a global positioning system, for example a global navigation satellite system (GNSS), such as GPS.

In an embodiment, the processing unit is configured to determine the current geolocation using location information received, via the electronic communications interface, from a local positioning system.

The local positioning system is, for example, a beacon-based positioning system using BLE, UWB, or other technologies. One or more transmission parameters of one or more transmissions exchanged between the access control device and the local positioning system may be used, the transmission parameters including, for example, a received signal strength indicator (RSSI), a time of arrival (ToA), a time of flight (ToF), a round-trip delay (RTD) and/or a round-trip time (RTT) to determine the location information of the access control device. The location information may be determined in the access control device and/or in the positioning system. If the location information is determined in the positioning system, the positioning system transmits the location information to the access control device.

In an embodiment, the processing unit is configured to determine the current geolocation using location information received, via the wireless communications module, from the electronic key device.

In an embodiment, the access control device further comprises a housing, the electronic circuit being arranged inside the housing. The access control device is attached to the transport container by a mounting apparatus attached to the housing and configured to permit the housing to be mechanically attached to a transport container.

In an embodiment, the mounting apparatus can be removably attached to the transport container so that the mounting apparatus can also be detached from the transport container.

In an embodiment, the access control device comprises the actuator and a locking mechanism. The actuator is configured to unlock the locking mechanism. The locking mechanism may include a U-lock or a cable lock, for example. The locking mechanism may require a manual operation to open the lock. In an embodiment, the access control device includes a power source, for example including a battery, which power source is operatively connected to the processing unit and the actuator.

In an embodiment, the access control device is attached to the transport container by being integrated into the transport container.

In an embodiment, the processing unit is further configured to determine the current status information by receiving the container status information from a logistics management system.

In an embodiment, the processing unit is further configured to receive, using the wireless communications module, a broadcast message transmitted by a security control device. The processing unit is configured to generate, in response to the broadcast message, a response message, wherein the respond message includes the current parameter(s). The processing unit is configured to transmit the response message to the security control device using the wireless communications module.

In an embodiment, the broadcast messages can be relayed by further intermediary access control devices. In an embodiment, the access control device can also independently transmit a beacon message.

In addition to an access control device, the present disclosure also relates to a method for authorizing physical access to contents of a transport container. The physical access is enabled by an access control device attachable to a transport container. The access control device comprises an electronic circuit, the electronic circuit comprising a processing unit, a memory configured to store access conditions, a wireless communications module configured for short-range communication, and an electronic communications interface. The method includes receiving, in the processing unit using the short-range wireless communications module, from an electronic key device, an authorization query. The method includes verifying, in the processing unit using key authorization rights included in the access conditions, the authorization query to determine whether the electronic key device is authorized. The method includes determining, in the processing unit a current parameter(s). The current parameter(s) includes a current geolocation of the access control device, a measured environmental parameter of the internal or external environment of the transport container, and/or current status information of the transport container. The method includes verifying, in the processing unit, whether the one or more current parameters satisfy the stored access conditions. The stored access conditions include a geolocation condition, an environmental condition, and a container status condition. The method includes generating, in the processing unit, an access authorization signal upon affirmative verification of the authorization query and the current parameters. The method includes transmitting, via the electronic communications interface, the access authorization signal to an external actuator for enabling physical access to contents of the transport container.

In an embodiment the method includes receiving, from a sensor system, the measured environmental parameter(s).

In an embodiment, the access control device further comprises a hardware secure element connected to the processing unit, the hardware secure element configured to securely store a cryptographic key. The method further comprises receiving, in the access control device using the wireless communication module, an encrypted access condition update package from a mobile communication device. The encrypted access condition update package is generated by a cloud-based server and forwarded to the mobile communication device. The encrypted access condition update package includes updated access conditions. The method includes decrypting, in the processing unit, the encrypted access condition update package using the cryptographic key stored securely in the hardware secure element. The method includes storing, in the memory, the received updated access conditions.

In an embodiment, the method further comprises transmitting, from the access control device to mobile communication device, an access confirmation message, the access confirmation message including the access authorization signal and an identifier of the access control device. The method includes receiving, in the mobile communication device, user input via a user interface of the mobile communication device, the user input indicative of an updated access condition for the access control device. The method includes transmitting, from the mobile communication device to the cloud-based server, the updated access condition, enabling the cloud-based server to generate the encrypted access condition update package.

The access confirmation message can further optionally include the access conditions or a subset thereof.

In an embodiment, the method further comprises defining, in the cloud-based server, the updated access conditions, the updated access conditions including an updated key authorization right, an updated geolocation condition, an updated environmental condition, and/or an updated container status condition. In an embodiment, the method comprises generating, in the cloud-based server, the access condition update package to include the updated access conditions. The method comprise encrypting, in the cloud-based server using a cryptographic key, the access condition update package. The method comprises transmitting, by the cloud-based server, the encrypted access condition update package, via a communication network, to the mobile communication device for forwarding to the access control device.

In addition an access control device and a method for authorizing physical access to contents of a transport container, the present disclosure also relates to a computer program product comprising computer program code which, when executed by a processing unit of an access control device, in particular an access control device as described herein, causes the access control device to perform the method as described herein.

The present disclosure also relates to a non-transitory memory comprising computer program code which, when executed by a processing unit of an access control device, in particular an access control device as described herein, causes the access control device to perform the method as described herein.

In another aspect, the present disclosure relates to an access control device attachable to a transport container, the access control device comprising an electronic circuit, the electronic circuit comprising a processing unit, a memory configured to store access conditions, a wireless communications module configured for short-range communication, and an electronic communications interface, wherein the access control device is configured to: receive, using the wireless communications module, from an electronic key device, an authorization query; verify, using key authorization rights included in the access conditions, the authorization query to determine whether the electronic key device is authorized; determine one or more of the following current parameters: a current geolocation of the access control device or a measured environmental parameter of the external environment of the transport container; verify whether the one or more current parameters satisfy the stored access conditions, the stored access conditions including one or more of: a geolocation condition or an environmental condition; generate an access authorization signal upon affirmative verification of the authorization query and the current parameters; and transmit, via the electronic communications interface, the access authorization signal to an actuator for enabling physical access to contents of the transport container.

In another aspect, the present disclosure relates to a method for authorizing physical access to contents of a transport container, the physical access enabled by an access control device attachable to a transport container, the access control device comprising an electronic circuit, the electronic circuit comprising a processing unit, a memory configured to store access conditions, a wireless communications module configured for short-range communication, and an electronic communications interface, wherein the method comprises: receiving, in the access control device using the short-range wireless communications module, from an electronic key device, an authorization query; verifying, in the access control device using key authorization rights included in the access conditions, the authorization query to determine whether the electronic key device is authorized; determining, in the access control device, one or more of the following current parameters: a current geolocation of the access control device or a measured environmental parameter of the external environment of the transport container; verifying, in access control device, whether the one or more current parameters satisfy the stored access conditions, the stored access conditions including one or more of: a geolocation condition or an environmental condition; generating, in access control device, an access authorization signal upon affirmative verification of the authorization query and the current parameters; and transmitting, via the electronic communications interface, the access authorization signal to an actuator for enabling physical access to contents of the transport container.

In another aspect, the present disclosure relates to a computer program product comprising computer program code which, when executed by a processing unit of an access control device, attachable to a transport container and comprising an electronic circuit with a processing unit, a memory configured to store access conditions, a wireless communications module configured for short-range communication, and an electronic communications interface, causes the access control device to: receive, using the short-range wireless communications module, from an electronic key device, an authorization query; verify, using key authorization rights included in the access conditions, the authorization query to determine whether the electronic key device is authorized; determine one or more of the following current parameters: a current geolocation of the access control device or a measured environmental parameter of the external environment of the transport container; verify whether the one or more current parameters satisfy the stored access conditions, the stored access conditions including one or more of: a geolocation condition or an environmental condition; generate an access authorization signal upon affirmative verification of the authorization query and the current parameters; and transmit, via the electronic communications interface, the access authorization signal to an actuator for enabling physical access to contents of the transport container.

### BRIEF DESCRIPTION OF THE DRAWINGS

The herein described disclosure will be more fully understood from the detailed description given herein below and the accompanying drawings, which should not be considered limiting to the invention described in the appended claims. The drawings in which:
- Fig. 1: shows a diagram illustrating a transport container with an attached access control device and a user with an electronic key device for unlocking the transport container;
- Fig. 2: shows a diagram illustrating a transport container with an attached access control device and a sensor system for monitoring environmental parameters;
- Fig. 3: shows a diagram illustrating a transport container with an attached access control device and a user with a mobile communication device for reprogramming the access control device;
- Fig. 4: shows a block diagram illustrating schematically an access control device for controlling access to a transport container;
- Fig. 5: shows a block diagram illustrating schematically an access control device connected to an actuator for enabling access to a transport container;
- Fig. 6: shows a block diagram illustrating schematically an access control device including an actuator for enabling access to a transport container;
- Fig. 7: shows a block diagram illustrating schematically an access control device for controlling access to a transport container, the access control device comprising a hardware secure element separate from a central processing unit;
- Fig. 8: shows a block diagram illustrating schematically a mobile communication device for updating access conditions for an access control device;
- Fig. 9: shows a flow diagram illustrating a method for authorizing physical access to contents of a transport container;
- Fig. 10: shows a flow diagram illustrating a method for receiving an update package including updated access conditions;
- Fig. 11: shows a flow diagram illustrating a method for decrypting and implementing an update package in an access control device;
- Fig. 12: shows a flow diagram illustrating a method for responding to a broadcast message in an access control device;
- Fig. 13: shows a flow diagram illustrating a method for updating access conditions for an access control device using a mobile communication device; and
- Fig. 14: shows a flow diagram illustrating a method for generating and transmitting an update package.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

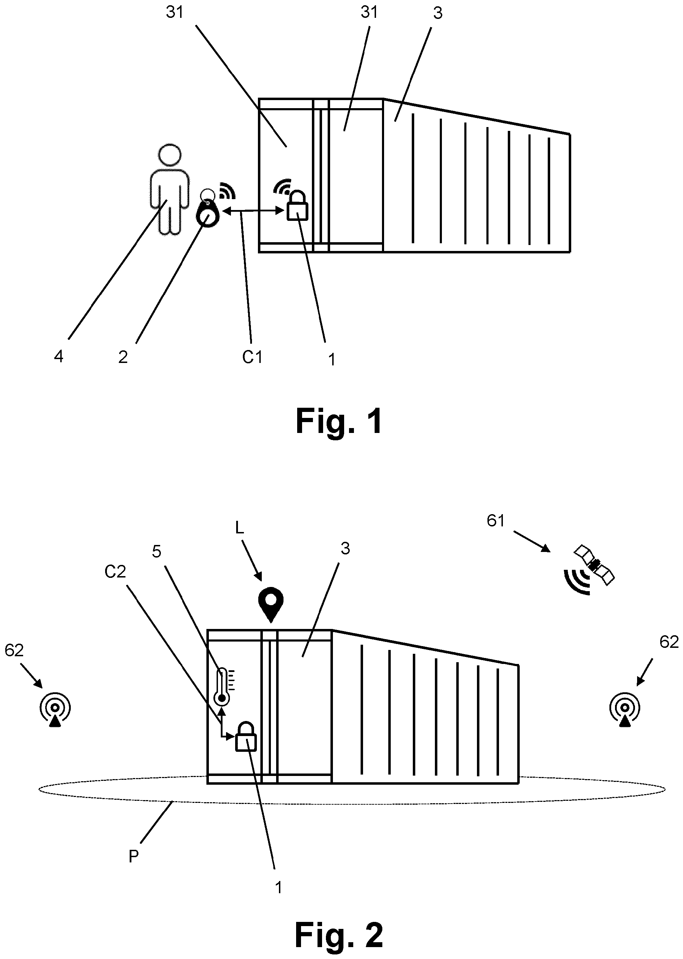

**Figure 1** shows a diagram illustrating a transport container 3 with an attached access control device 1. A user 4 with an electronic key device 2 is situated near the transport container 3. The electronic key device 2 is used by the user 4 for unlocking and/or opening the transport container 3, thereby enabling physical access to the transport container 3, in particular to the interior of the transport container 3.

The transport container 3 is, in an embodiment, a standardized container according to ISO 6346 and/or ISO 668. The transport container 3 may alternatively also be part of a vehicle, such as truck including an integrated transport container in the form of a cargo compartment, or a rail car including an integrated cargo compartment. Other implementations of the transport container 3 are also possible, including as a cargo hold of a ship, as a storage compartment on a plane, as a small lockable box attached to a bicycle, etc.

Further implementations include a medical transport container, for example for the transport of medically relevant content including medical samples, organs, or medications.

The transport container 3 may also be a container movable by hand, such as a small freight or logistics container. The underlying properties of the transport container 3 are that it is designed to be transportable, either by man and/or machine, and that it encloses some volume suitable for storage and/or transportation of cargo. The cargo can be any one of commercial, industrial, or private goods, commodities, manufactured products, etc.

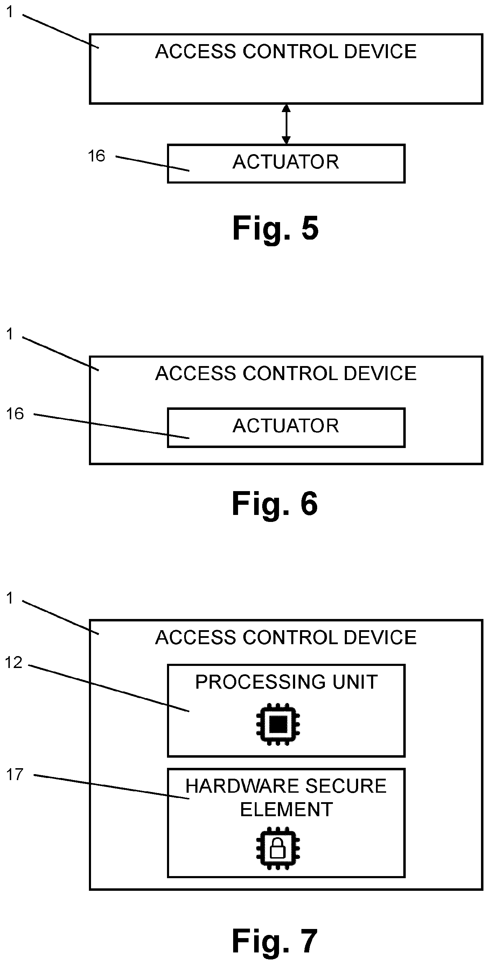

Physical access to the transport container 3 is governed by the access control device 1. The access control device 1 is, at least temporarily, affixed, attached, and/or otherwise mechanically coupled to the transport container 3. The access control device 1 is additionally at least connected to an actuator (not shown) which, when actuated, enables physical access to the transport container 3, in particular to an interior of the transport container 3. WAs is described in more detail with reference to **Figures 5** and **6****,** the access control device 1 may be connected to the actuator, or the access control device 1 may include an integrated actuator. The actuator may, depending on the embodiment, move a lock bolt such that an opening 31, for example a door, to the transport container 3 is openable. The actuator may, alternatively or additionally, be configured to open the opening 31 itself.

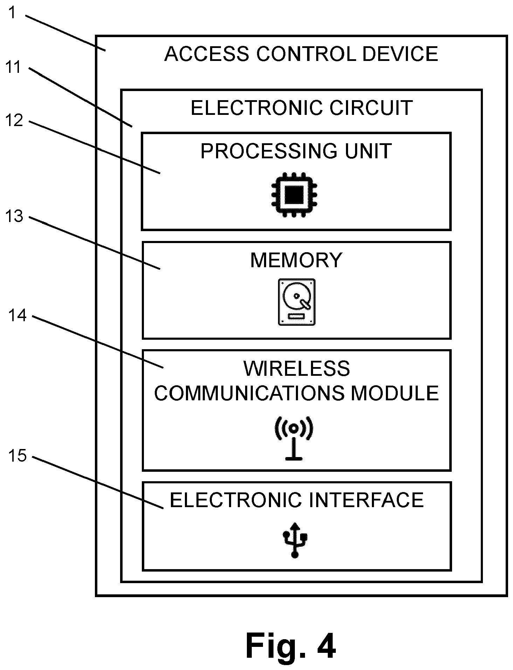

The access control device 1 includes a wireless communications module (not shown) described in more detail with reference to **Figure 4** which is configured for short range wireless communication over a wireless connection C1 with an electronic key device 2.

The electronic key device 2 is in possession of a user 4. The electronic key device 2 includes a short range wireless communications module configured for short range wireless communication over the wireless connection C1 with the access control device 1.

In an embodiment, the electronic key device 2 is a mobile device (i.e., portable device), implemented as a self-contained unit arranged in a housing. For example, the electronic key device 2 is implemented as a dongle, a key fob, an electronic tag, or the like.

In an embodiment, the electronic key device 2 may be implemented as a hardware and/or software module in another device, for example a portable electronic device such as a smart phone.

In an embodiment, the electronic key device 2 is implemented as a passive electronic key device 2, for example as an RFID (for example, NFC) key fob, which is configured to store a credential. The passive electronic key device does not include an internal power source and is configured for passive communication in which RFID (for example, NFC) circuitry of the key fob is briefly powered, via induction, from an interrogating device (e.g., the access control device 1). The passive electronic key device 2 is configured to transmit the credential, as part of an authorization query, upon receiving an interrogation signal from the access control device 1.

In an embodiment, the electronic key device 2 is implemented as an active electronic key device comprising an internal power source, in particular a battery. The electronic key device 2 may further include a user interface, in particular in the form of a user operable element such as a button or switch. The electronic key device 2 may be configured to transmit an authorization query comprising a credential upon the user 4 activating the user operable element.

Depending on the embodiment, the electronic key device 2 includes a power supply, for example a battery. The electronic key device 2 may alternatively or additionally be configured to draw power from a portable electronic device such as a smart phone.

Once the electronic key device 2 comes into communicative range with the access control device 1, the electronic key device 2 is able to transmit an authorization query including a credential to the access control device 1.

**Figure 2** shows a diagram illustrating a transport container 3 with an attached access control device 1. A sensor system 5 is further included for monitoring environmental parameters. The sensor system 5 is either connected to, or integrated into, the access control device 1. In the case that the sensor system 5 is connected to the access control device 1, the environmental parameters are transmitted, from the sensor system 5 to the access control device 1, using a wired and/or wireless connection C2.

The sensor system 5 is configured to determine environmental parameters inside and/or outside the transport container 3 and has sensors configured to determine these environmental parameters. The environmental parameters include, for example, an air temperature, an air humidity, a barometric pressure, thermal irradiation, solar irradiation, a light level, levels of one or more gasses (e.g., CO2 concentration), and an orientation (in particular, an orientation of the transport container 3). The environmental parameters may further include a noise level. The environmental parameters may further include motion, vibration, and/or movement.

In particular, the sensor system 5 is configured to determine a temperature and an air humidity both inside and outside of the transport container 3.

The sensor system 5 may be integrated, at least partially, into the access control device 1. The sensor system 5 has one or more sensors for sensing, i.e. for performing measurements of the environmental parameter(s). To this end, the sensor system 5 may include one or more parts, components and/or modules arranged within the transport container 3 and/or one or more parts, components and/or modules arranged outside the transport container 3, for example attached to an outside side wall of the transport container 3. The various components of the sensor system 5 are connected to each other using wired and/or wireless connections.

The transport container 3 is located at a particular geolocation L (i.e. a geographic location), which may be defined using a set of coordinates defining a particular geographic point (the set of coordinates include, for example, longitude and latitude). The geographic location L may also be defined as an area, for example as being within a pre-defined vicinity of the particular geographic point, and/or as a number of coordinates defining a boundary. The geolocation L may be defined using an address or other indicator of a geolocation L.

The geographic location L may be an outdoor location, for example defining a shipyard, railyard, or other logistics or transportation hub. The geographic location L may be a customs office. In an example, the geographic location L may be defined as a particular geographic area, for example a country, state, or district.

The geographic location L may also be an indoor location, for example a logistics facility such as a warehouse, a production facility, inside a storage facility, inside a retail shop, a hospital, or a laboratory.

The access control device 1 is configured to determine a current geolocation L using a location system, for example a global navigation satellite system (GNSS) 61, such as GPS or Galileo. The current geolocation L may, additionally or alternatively, be determined using a local location system 62 (e.g., an indoor location system), which may make use of beacon devices. The location system may also include using assisted GNSS (A- GNSS), where additional information necessary for achieving a location fix is provided via a radio network instead of a satellite link. The location system, additionally or alternatively, includes the use of local WLAN access points for determining the geolocation L.

The access control device 1, as is explained below in more detail, is configured to verify whether the current geolocation L matches a geolocation condition, the geolocation condition defined as one or more locations, areas, or perimeters P at or within which access may be permitted.

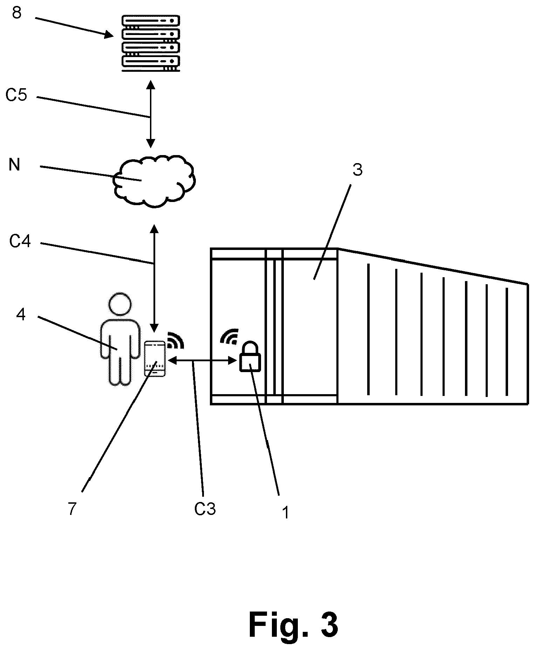

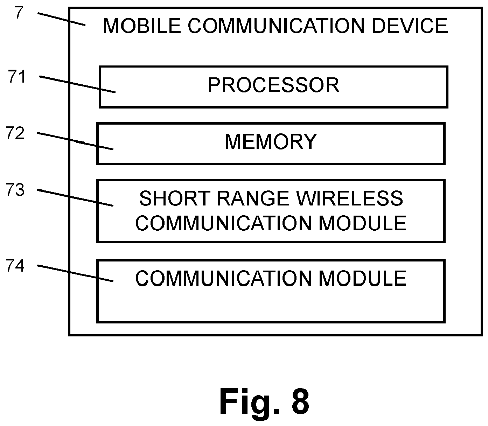

**Figure 3** shows a diagram illustrating a transport container 3 with an attached access control device 1. A user 4 is in possession of a mobile communication device 7 for reprogramming the access control device 1. The user 4 may also be in possession of an electronic key device (not shown). The user 4 uses the mobile communication device 7, which is described in more detail with reference to **Figure 8****,** to load updated access conditions onto the access control device 1.

The mobile communication device 7 is communicatively coupled to the access control device 1 via a short range wireless connection C3. The mobile communication device 7 is further connected to a cloud-based server 8 via a wireless connection C4 to an intermediary communication network N. The communication network N comprises, for example, a mobile radio network, such as a GSM (Global System for Mobile Communication) network, a UMTS (Universal Mobile Telephone System) network, and/or another cellular radio communication network. The communication network N may comprise a wireless local area network (WLAN). The communication network N may comprise the Internet.

The cloud-based server 8 is connected to the communication network N via a further data connection C5.

The cloud-based server 8 is implemented, for example, as one or more server computers located remotely from the transport container 3, for example in a data center. The cloud-based server 8 comprises one or more processors, memory, etc. The memory, which includes volatile and/or non-volatile components, contains program code configured to control the processor such that the cloud-based server 8 performs one or more methods, steps, and/or functions as described herein.

**Figure 4** shows a block diagram illustrating schematically an access control device 1 for controlling access to a transport container (not shown). The access control device 1 is attached to the transport container 3. The access control device 1 may be temporarily attached to the transport container 3, permanently attached to the transport container 3, or integrated into the transport container 3. The access control device 1 includes an electronic circuit 11. The access control device 11 may further include a housing (not shown) in which the electronic circuit 11 is arranged, and may include attachment means for attaching the access control device 1 to the transport container 3. The housing may be sealed such that the electronic circuit 11 is protected from the environment, in particular protected from water and/or dust ingress.

The electronic circuit 11 includes one or more electronic components and/or modules which are configured to perform one or more methods, steps, and/or functions described herein. The electronic components and/or modules are connected to each other, for example for purposes of power transfer and/or data transfer. For example, the electronic components and/or modules are connected to each other by way of connection to a common printed circuit board (PCB), however implementations are possible which have multiple connected PCBs, and at least some of the electronic components and/or modules may be arranged externally to the PCB.

The electronic circuit 11 include a processing unit 12, a memory 13, a wireless communications module 14, and an electronic interface 15.

The processing unit 12 comprises one or more electronic chips, for example one or more integrated circuits, microcontrollers, microprocessors, application specific circuits (ASICs), or the like.

The memory 13 comprises volatile (non-persistent) and/or non-volatile (persistent) memory modules. For example, the memory 13 is implemented using solid state memory (e.g. flash memory). The memory 13 is configured to store firmware, an operating system, and/or additional data relating to the firmware and/or operating system, such as application data, software libraries, log data, etc. Additionally, the memory 12 is configured to store access conditions.

The access conditions include key authorization rights which define one or more electronic key devices (and/or credentials and/or cryptographic secrets stored in the electronic key devices) for which access to the transport container may be permitted. The key authorization rights may include one or more time-windows for each electronic key device, during which time-window access may be permitted.

The access conditions may include one or more geolocation conditions. The geolocation conditions are outdoor and/or indoor positions or areas where access to the transport container 3 may be permitted, for example defined by coordinates such as a latitude and longitude, an elevation, an address, and/or another identifier of a geographic location.

The access conditions may include an environmental condition. The environmental condition may include one or more thresholds, ranges, or statuses of one or more environmental parameters as described herein. Access may be permitted only if the one or more current and/or past environmental parameters satisfy the environmental conditions.

The access conditions may further include a container status condition. The container status condition may define one or more statuses (including one or more internal statuses and/or one or more logistics statuses) which the access control device 1 or transport container 3 must have for access to be permitted.

The processing unit 12 is configured to execute one or more methods, steps and/or functions as described herein. For example, the processing unit 12 is configured to execute one or more methods steps and/or functions as stored in the memory 13. The methods, steps, and/or functions are stored, for example, in the memory 13 as program code (e.g., as part of the firmware, the operating system, and/or the software libraries). Other methods, steps and/or functions may be carried out by specifically arranged circuitry in the processing unit 12.

Depending on the embodiment, the processing unit 12 and the memory 13 are integrated into a single electronic chip, for example in the form of a System on a Chip (SoC).

The wireless communications module 14 is configured for close range wireless communication with an electronic key device and/or with a mobile communication device within the close range of the access control device 1. The wireless communications module 14 comprises an RFID (Radio Frequency Identification), NFC (Near Field Communication), Bluetooth, BLE (Bluetooth Low Energy) circuit, UWB (ultra wide-band) and/or another circuit for wireless data communication over a close range, such as within 5 centimeters, within 30 centimeters, within one meter, up to five meters, or up to ten meters.

In an embodiment, the wireless communications module 14 is configured to determine a distance between the wireless communications module 14 and a further device (e.g., the electronic key device or the mobile communication device) using, for example, a received signal strength indicator (RSSI), time of flight (ToF), a round-trip time (RTT), etc. The wireless communications module 14 may be configured to exchange data only if the determined distance satisfies a defined threshold, for example, less than 5 centimeters, less than 30 centimeters, less than one meter, less than five meters, or less than ten meters.

In an embodiment, the wireless communications module 14 is further configured for data communication with a logistics management system, for example a container management system. The data communication with the logistics management system may be configured to take place over a larger distance than the data communication with the electronic key device and/or the mobile communication device. The data communication with the logistics management system may also take place using a different communications technology than the data communication with the electronic key device and/or the mobile communication device.

For example, the data communication with the logistics management system may take place using Bluetooth, while the data communication with the electronic key device and/or the mobile communication device may take place using NFC. The logistics management system may be configured to transmit, to the access control device 1, current status information of the transport container 3.

The current status information includes a logistics status of the transport container. For example, the logistics status may indicate that the transport container is available, not available, empty, filled, ready in pool, currently being loaded, currently being unloaded, in transit, in customs, at the destination, in refurbishment, etc.

The electronic interface 15 is a wired and/or wireless communications interface which enables data communication between the access control device 1 and one or more auxiliary devices and/or components. The electronic interface 15 may further provide power to the one or more auxiliary devices and/or components. For example, the electronic interface 15 comprises a serial and/or parallel interface for serial or parallel digital communication, respectively, an analogue interface including one or more voltage signals (e.g. a line voltage, PWM, PDM, etc.). In particular, the electronic interface 15 is configured for data communication with an actuator, or for powering an actuator, which actuator is configured to enable physical access to contents of the transport container 3.

The electronic interface 15 may, for example, be configured to receive location data, for example including a current geolocation L, of the access control device 1. The current geolocation L may be received from a positioning system such as a GNSS 61, a local positioning system including positioning beacons 62, or other positioning system configured to determine, or enable a determination, of the current geolocation L.

The electronic interface 15 may be configured to receive, from the logistics management system, the current status information of the transport container 3.

The access control device 1 may include further electronic modules, such as a GNSS receiver (in particular, a GPS receiver), and/or another positioning system module configured to enable a determination of the geolocation of the access control device 1.

The access control device 1 includes, depending on the implementation, a power source, for example a battery connected to the electronic circuit 11.

**Figure 5** shows a block diagram illustrating schematically an access control device 1 connected to an actuator 16 for enabling access to a transport container. The actuator 16 is, for example a bolt which locks an openable element of the transport container 3, such as a door. The actuator 16, additionally or alternatively, opens the openable element of the transport container 3. Therefore, depending on the embodiment, gaining physical access to contents of the transport container 3 may or may not require a user action. The connection between the access control device 1 and the actuator 16 may be a wired connection, for example via a wire or cable. The connection between the access control device 1 and the actuator 16 may also be a wireless connection.

**Figure 6** shows a block diagram illustrating schematically an access control device 1 including an integrated actuator 16 for enabling access to a transport container. The actuator 16 is integrated for example in that it is structurally integrated with the access control device 1, for example by being attached to a housing of the access control device 1 or by being arranged within the housing of the access control device 1.

For example, the access control device 1 is implemented as an electronic U-lock or an electronic padlock in which the access control device 1 includes a shackle bar which is unlockable by way of the actuator 16. The access control device 1 is attached to the transport container 3 by the shackle bar, for example, with the shackle bar engaged with an opening mechanism of the opening (i.e., the door) of the transport container 3 such that the transport container 3 cannot be opened while the shackle bar is in place. The access control device 1 transmits a signal to the actuator 16, such that the shackle bar may be opened and removed from the opening mechanism, enabling physical access to the contents of the transport container 3.

**Figure 7** shows a block diagram illustrating schematically an access control device 1 for controlling access to a transport container 3, the access control device 1 comprising a hardware secure element 17 separate from a (central) processing unit 12.

The hardware secure element 17 is a hardware module that is separate and connected to the processing unit 12, for example via one or more traces on a PCB or via one or more wires. The hardware secure element 17 is a tamper resistant hardware module, capable of storing data which must be kept strictly confidential and private. The hardware secure element 17 provides both physical and logical protection of data, and may respond to tampering efforts by deleting stored data or otherwise rendering the hardware secure element 17 inoperable.

The hardware secure element 17 may store a cryptographic key. The hardware secure element 17 preferably includes an encryption module, which comprises program code configured to control the hardware secure element 17 to decrypt a data package using the cryptographic key. By performing the data decryption within the hardware secure element 17, rather than in the processing unit 12 of the access control device 1, the cryptographic key is kept secret from the remainder of the access control device 1, in particular from the processing unit 12, thereby improving security. The hardware secure element 17 may have stored therein a unique chip identifier. The hardware secure element 17 may have stored thereon an authentication module, which comprises program code configured to control the hardware secure element 17 and/or the processing unit 12 to determine authorization of an authorization query received from an electronic key device.

For example, the hardware secure element is implemented using a universal integrated circuit card (UICC) and/or using an embedded secure element (eSE). The hardware secure element is configured, for example, to securely store one or more cryptographic keys. The hardware secure element includes, depending on the embodiment, a processing unit and/or a memory.

In an alternative embodiment, the hardware secure element 17 is integrated into the processing unit 12.

**Figure 8** shows a block diagram illustrating schematically a mobile communication device 7 for updating access conditions for an access control device (not shown). The mobile communication device 7 includes a processor 71 and a memory 72. The processor 71 comprises, for example, a central processing unit (CPU), a system on a chip (SoC), and/or other general purpose processing units such as a graphical processing unit (GPU). The processor 71 may further comprise specific processing units, such as application specific processing units (ASICs), etc. The memory 72 includes volatile (non-persistent) and/or non-volatile (persistent) memory modules, for example including random access memory (RAM) and flash memory, respectively. The memory 72 is configured to store program code for controlling the processor 71, for example in the form of a firmware, operating system, software applications (also referred to as Apps), libraries, etc. The program code may be compiled and/or non-compiled program code. At least some of the program code may be embedded program code. The program code is configured such that the processor 71 performs one or more methods, steps and/or functions as described herein. The skilled person is aware that at least some of the methods, steps and/or functions described herein as being performed by the mobile communication device 7 (in particular, the processor 71), may be performed by another device, for example the cloud-based server 8.

The mobile communication device 7 is implemented as a mobile radio telephone (cellular phone), a laptop computer, a tablet computer, a smart watch, or another mobile electronic device configured for wireless communication via short range communication and via a communication network, for example via a mobile radio network or via a WLAN. For that purpose, the mobile communication device 7 comprises a short range wireless communication module 73 for short range communication, in particular short range wireless communication compatible with the wireless communication module 14 of the access control device 1, and a communication module 74 for communicating with the cloud-based server 8 via the communication network N, as illustrated in **Figure 3****.**

The short range wireless communication module 73 includes, for example, an RFID (Radio Frequency Identification), NFC (Near Field Communication), Bluetooth, or BLE (Bluetooth Low Energy) circuit, UWB (ultra wide-band) or another circuit for wireless data communication over a close range, such as within 5 centimeters, within 30 centimeters, within one meter, up to five meters, or up to ten meters.

The mobile communication device 7 may further include a human machine interface, comprising, for example, a touch display, one or more buttons or other user input elements, a loudspeaker, etc. The mobile communication device 7 may further include a battery as well as other electronics necessary for proper functioning.

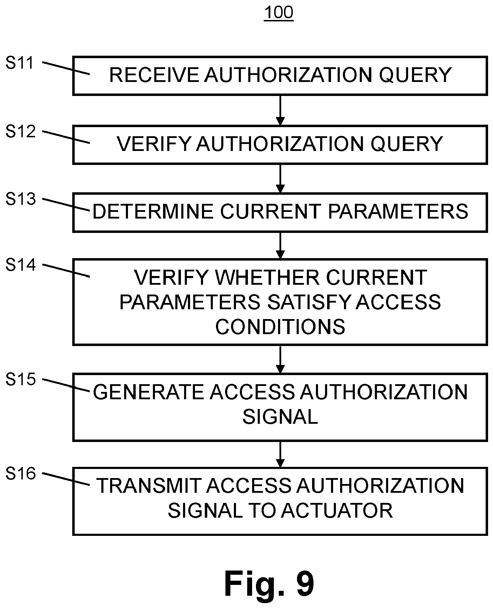

**Figure 9** shows a flow diagram illustrating a method 100 for authorizing physical access to contents of a transport container. The method 100 is performed by the access control device 1, in particular using the processing unit 12, and includes a number of steps S11 - S16. The method 100 is typically performed when a user 4 wishes to gain access to the transport container 3. For example, when the cargo carried by the transport container 3 has arrived at its intended final destination. The method 100 may also be performed prior to the transport container beginning transit, for example during loading of the transport container 3. The method 100 may also be performed during transit, for example when the transport container 3 is moved through customs and officials may need to inspect the contents of the transport container 3.

In step S11, an authorization query is received, using the wireless communications module 14, from an electronic key device 2. The electronic key device 2 may be in possession of a user 4. The authorization query may include a credential. The credential is, for example, a unique identifier of, and/or a cryptographic secret associated with, the electronic key device 2 and/or the user 4. The authorization query may be transmitted by the electronic key device 2 in response to an interrogation message transmitted by the access control device 1 in an optional previous step.

In step S12, the authorization query is verified. In particular, the processing unit 12 of the access control device 1 verifies the credential included in the authorization query. The credential is verified using key authorization rights stored in the memory 13 of the access control device 1. The key authorization rights may be stored as part of access conditions stored in the memory 13. The key authorization rights include, for example, a list of one or more credentials. If the credential received as part of the authorization query matches a credential included in the key authorization rights, the authorization query is verified. The key authorization rights may further include, for each key authorization right, one or more time-windows during which access may be permitted.

Additionally or alternatively, another verification scheme may also be applied. For example, the key authorization rights may include a cryptographic secret, a hash, or a cryptographic digest associated with the credential received as part of the authorization query. The verification may include determining whether the received credential matches, i.e. is associated with, at least one cryptographic secret. The verification may include hashing or otherwise generating a digital digest of the credential and determining whether the key authorization rights include a matching hash or matching digital digest, respectively.

In an embodiment, step 13 is performed only if the electronic key device 2 was affirmatively authorized in step 12.

In an embodiment, the authorization query is verified in the hardware secure element 17. In particular, the authorization query (or the credential included in the authorization query) is transmitted, by the processing unit 12, to the hardware secure element 17. Additionally, the key authorization rights, or part thereof, may be transmitted to the hardware secure element 17 from the memory 13. The hardware secure element 17 is configured to verify the authorization query, using the key authorization rights or part thereof, and to transmit, to the processing unit 12, whether the authorization query was positively or negatively verified.

In an embodiment, the access control device 1 is configured to generate an alarm signal upon negative verification of the authorization query. The alarm signal includes an identifier of the access control device 1 and an address of a cloud-based server 8.

In an embodiment, the access control device 1 is configured to transmit the alarm signal to the electronic key device 2 for forwarding to the cloud-based server 8. The electronic key device 2 is configured to store the alarm signal. When the electronic key device 2 connects to the mobile communication device 7, the alarm signal is forwarded to the mobile communication device 7, which receives the alarm signal and forwards it to the cloud-based server as indicated by the address.

In an embodiment, the access control device 1 is configured to transmit the alarm signal to the mobile communication device 7 for forwarding to the cloud-based server 8. The mobile communication device 7 is configured to receive the alarm signal and forward it to the cloud-based server 7 as indicated by the address.

In step S13, one or more current parameters are determined. In particular, the current parameters are determined in the access control device (more specifically, the processing unit). The current parameter(s) include a current geolocation of the access control device 1, a measured environmental parameter, and/or current status information of the transport container 3.

In an embodiment, at least one of the current parameter(s) is determined using data generated by a device or system external to the access control device 1, which data is then transmitted to the access control device 1 and received by the access control device 1. The data may be received using the wireless communications module 14 and/or the electronic interface 15.

For example, the current geolocation of the access control device 1 may be determined by a positioning system which then transmits the current geolocation to the access control device 1. The access control device 1 determines the current geolocation by receiving the current geolocation from the positioning system.

In another example, an (external) sensor system 5 measures one or more environmental parameters and transmits the one or more measured environmental parameters to the access control device 1, which receives the environmental parameter(s). The access control device 1 determines the environmental parameter(s) by receiving them.

In another example, a logistics management system transmits the current status information, in particular a logistics status, of the transport container 3 to the access control device 1. The access control device 1 determines the current status information of the transport container 3 (in particular the logistics status) by receiving the current status information.

In an embodiment, at least one of the current parameter(s) is determined using data generated by the access control device 1, for example using data generated by an electronic component of the access control device 1.

For example, the current geolocation of the access control device 1 is determined using a GNSS receiver connected to, or integrated into, the access control device 1. The GNSS receiver is configured to generate the current geolocation of the access control device using signals received from satellites of the GNSS.

In another example, the current geolocation of the access control device 1 is determined in the access control device 1 using one or more signals received from a local positioning system (e.g. an indoor positioning system), for example a Bluetooth beacon system or an UWB positioning system, using techniques or properties of the transmission including RSSI, ToF, RTT, etc.

In another example, the environmental parameter(s) are measured by a sensor system 5 integrated into the access control device 1. Thereby, the access control device 1 determines the environmental parameter(s) by receiving the measured environmental parameter(s) from the integrated sensor system 5.

In an embodiment, the environmental parameter(s) further include stored environmental parameters, for example as measured by a sensor system 5 and recorded in the memory 13 of the access control device 1. In particular, environmental parameters measured and recorded since the transport container 3 was last loaded and/or closed are relevant.

In another example, the current status information is determined, at least in part, by the access control device 1. For example, the access control device 1 may include an internal status, such as whether the transport container 3 is empty, filled, or partially filled. The internal status of the transport container 3 may be determined using a measurement system, for example a weight measuring system, an acoustic measurement system, and/or a vision system. The internal status may include a current time, a time since access conditions were last updated, a time since the access control device 1 last received data from the cloud-based server 8, etc.

In step S14, the access control device 1 verifies whether the one or more current parameters satisfy (i.e., fulfill) access conditions. These conditions for access are stored in the memory 13 of the access control device 1. The access conditions may define one or more values, thresholds, limits, ranges, etc. for (or within) which each of the current parameters are considered to be satisfied (i.e., fulfilled).

In particular, the access control device 1 verifies whether the current geolocation of the access control device 1 matches a geolocation condition. The access control device 1 verifies whether the measured environmental parameter(s) satisfy the environmental condition(s). The access control device 1 verifies whether the current status information satisfies the one or more container status conditions.

In an embodiment, the geolocation condition is dependent on the user 4 (or the electronic key device 2, more particularly the credential included in the authorization query). Thereby, different electronic key devices which are authorized may be permitted access to the transport container 3 at different geolocations.

In an embodiment, step 14 is performed only if the electronic key device 2 was affirmatively authorized in step 12.

For example, for cold chain logistics, the access conditions typically include one or more temperature ranges as indicated in Table 1 below. The access control device 1, in particular the processing unit 12 of the access control device 1, may verify that a current ambient temperature outside the transport container 3 satisfies the temperature range included in the access conditions such that the chilled or frozen goods are not subject to an incorrect temperature when the transport container 3 is opened. Further, the access control device 1 may verify whether recorded environmental parameters indicate that the transport container 3 has not experienced an internal temperature outside the specified temperature range as included in the access conditions since the transport container 3 was last loaded and closed. Thereby, physical access to potentially damaged or spoiled goods can be prevented.

**Table 1 showing regulatory definitions of temperature ranges as provided by the European Pharmacopoeia (Pharm.Eur.), WHO Guidance, U.S. Pharacopeia (USP) and Japanese Pharmacopeia (JP).**

| | Pharm. Eur. | WHO | USP | JP |
|---|---|---|---|---|
| Frozen/ deep-freeze | >-15°C | -20°C | - | - |
| Refrigerator | 2°C - 8°C | - | - | - |
| Cold | 8°C - 15°C | 2°C - 8°C | <8°C | 1°C - 15°C |
| Cool | 8°C - 15°C | 8°C - 15°C | 8°C - 15°C | - |
| Room temperature | 15°C - 25°C | 15°C - 25°C | temperature prevailing in a work area | 1°C - 30°C |
| Controlled room temperature | - | - | 20°C - 25°C excursions between 15°C and 30°C are allowed | - |
| Ambient temperature | - | 15°C - 25°C or 30°C depending on climatic conditions | - | - |

The temperature ranges indicated in Table 1 above may include ranges for relative humidity. Additionally, some cargo may include packaging gas, for example argon, helium, nitrogen, or carbon dioxide, and the environmental parameter(s) may include acceptable ranges for one or more gasses.

In step 15, the access control device 1, in particular the processing unit 12, generates an access authorization signal upon affirmative verification of the authorization query and the current parameters. The authorization signal is configured to enable physical access to contents of the transport container 3.

In step S16, the access control device 1 transmits the access authorization signal to an actuator 16 using the electronic communications interface, thereby causing the actuator to unlock and/or open the transport container 3 to enable physical access to the contents of the transport container 3.

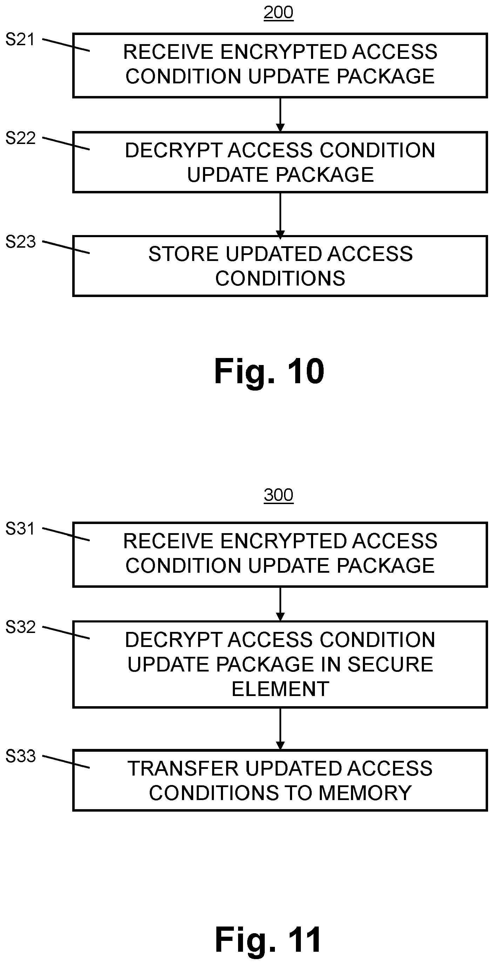

**Figure 10** shows a flow diagram illustrating a method 200 for receiving an update package including updated access conditions. The method 200 is performed in the access control device 1, in particular in the processing unit 12. The method 200 may be performed prior to transit of the transport container 3, while the transport container 3 is in transit, and once the transport container 3 has arrived at its destination. In an example, the method 200 is performed after access to the transport container 3 has been granted using method 100. Using method 200, the access conditions are updated for a subsequently loaded cargo or for one or more subsequent parts of transit.

For example, current access conditions may be configured to enable access to a first user at a first geolocation. After gaining access to the transport container 3, the access control device 1 receives an access condition update package which defines updated access conditions, in particular which enable access to the transport container 3 for a second user at a second location. The current access conditions and/or the access condition update package may also define a number of geolocations where access is permitted.

In a preparatory step S20 (not shown), the mobile communication device 7 receives, from the cloud-based server 8, an encrypted access condition update package comprising updated access conditions. The encrypted access condition update package is received using the communication module 74. The encrypted access condition update package is temporarily stored in the mobile communication device 7. The encrypted access condition update package is transmitted, using the short range wireless communication module 73, to the access control device 1. To this end, the mobile communication device 7 may need to be brought into sufficiently close range to the access control device 1.

In an embodiment, the transmission of the encrypted access condition update package is dependent on a user command. The user command is input, via the human machine interface, into the mobile communication device 7.

In step S21, the access control device 1 receives the encrypted access condition update package. The access control device 1 receives the encrypted access condition update package using the wireless communications module 14.

In step S22, the access control device 1 decrypts the encrypted access condition update package. The access condition update package is decrypted, in the processing unit 12, using a cryptographic key stored securely in the hardware secure element 17.

In step S23, the updated access conditions as included in the access condition update package are stored in the memory 13 of the secure element.

**Figure 11** shows a flow diagram illustrating a method 300 for decrypting and implementing an encrypted access condition update package in the access control device 1, in particular by decrypting the encrypted access condition update package in the secure element 17. The method 300 includes a number of steps S31 - S33. The method 300 may be performed as an alternative to method 200 or in conjunction with method 200.

In step S31 the access control device 1 receives the encrypted access condition update package using the wireless communications module 14. The access control device 1 transfers the encrypted access condition update package to the hardware secure element 17.

In step S32, the encrypted access condition update package is decrypted in the hardware secure element 17 using the cryptographic key stored securely in the hardware secure element 17.

In step S33, the updated access conditions contained in the access condition update package are transferred, from the hardware secure element 17, to the memory 13.

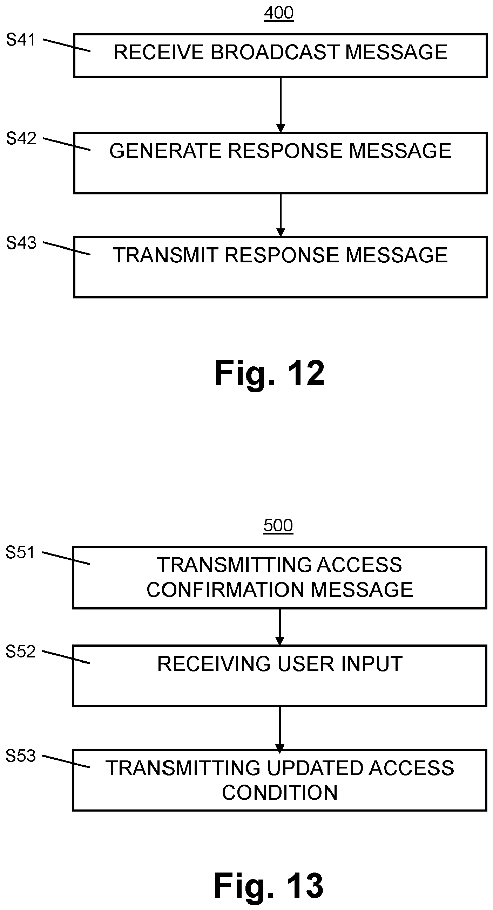

**Figure 12** shows a flow diagram illustrating a method 400 for responding, by access control device 1, to a broadcast message. The method 400 includes a number of steps S41 - S43. The method 400 is performed by the access control device 1. Optionally, the method 400 also includes one or more steps performed by the mobile communication device 7 or a security control device (e.g., a handheld portable electronic device such as a tablet or a smart phone). The method 400 is performed, for example, in a shipping yard or other logistics hub to quickly and efficiently determine the current parameters of a plurality of access control devices 1 attached to a plurality of transport containers 3, respectively.

In an optional preparatory step S40, the mobile communication device 7 or the security control device transmit a broadcast message.

In step S41, the access control device 1 receives the broadcast message using the wireless communications module 14.

In an embodiment, the access control device 1 rebroadcasts the broadcast message, thereby transmitting the broadcast message to a further access control device 1 which may not have been within reception range of the mobile communication device 7 or the security device. The access control device 1 may include, in the transmitted broadcast message, a counter or alternatively, increment a counter if the broadcast message received already included a counter.

In an embodiment, the access control device 1 is configured to determine whether the broadcast message is to be further transmitted. For example, the access control device 1 may examine a counter included in the broadcast message, the counter indicative of a number of times the broadcast message has been rebroadcasted. The access control device 1 may be configured not to rebroadcast the broadcast message if the counter is above a particular threshold, for example five. In an embodiment, the broadcast message received includes a time-stamp. The access control device 1 is configured to rebroadcast the broadcast message only if the time-stamp is recent as compared to an internal clock of the access control device 1, for example within the last 10 seconds. Thereby, a flooding of the wireless channel is avoided as the broadcast messages will only be rebroadcasted a particular number of times and/or for a particular time interval.

In step S42, the access control device 1 is generates a response message. The response message comprises, for example, an identifier of the access control device 1. The response message may further comprise current parameters of the access control device 1, in particular a current geolocation of the access control device 1, current environmental parameters of the access control device 1, and/or current status information of the access control device 1.

In step S43, the access control device 1 transmits the response message, using the wireless communications module 14, to the mobile communication device 7 or the security control device.

In an embodiment, the access control device 1 is configured as relay device which receives one or more response messages from further access control devices 1 and transmits the one or more response messages, for example to the mobile communication device 7 or the security control device.

In an embodiment, the access control device 1 may be configured to periodically transmit a beacon message, the beacon message including an identifier of the access control device 1 and the current parameters. The beacon message may be received by the mobile communication device 7 and/or the security control device. The access control device 1 may be configured to receive further beacon messages from further access control devices 1 and transmit the further beacon messages.

**Figure 13** shows a flow diagram illustrating a method 500 for defining and/or updating access conditions for an access control device 1 using a mobile communication device 7. The method 500 includes a number of steps S51 - S53. The method 500 is typically performed when the transport container 3 is loaded with cargo. The method 500 may further be performed in transit, for example when going through customs. The method 500 is further typically performed after the method 100 is performed.

In step S51, the access control device 1 transmits an access confirmation message to the mobile communication device 7 upon affirmative verification of an authorization query transmitted from the mobile communication device 7 to the access control device 1 (as described herein in step S11 and S12 of method 100). The access confirmation message is received in the mobile communication device 7. The access confirmation message includes an identifier of the access control device 1 and optionally a digital signature of the access control device 1, verifying that the access control device 1 generated the access confirmation message. In an embodiment, the access confirmation message is generated using the cryptographic key stored securely in the hardware secure element 17. The access confirmation message may include one or more of the current access conditions.

In step S52, user input is received in the mobile communication device 7 from the user 4 via a user interface. The user input includes, for example, a text input, a voice input, and/or a touch input. The user input is used to define one or more updated access conditions of the access control device 1. In an embodiment, the updated access condition(s) is newly defined in the mobile communication device 7. In another embodiment, the current (old) access conditions are received in the mobile communication device 7, for example from the access control device 1 itself, or from the cloud-based server 5 upon transmission of a query message including the identifier of the access control device 1 and optionally the digital signature. The updated access condition(s) may therefore be defined in the mobile communication device 1 as one or more changes to the current access condition(s).

The updated access condition(s) may specify key authorization rights which define one or more electronic key devices (or credentials and/or cryptographic secrets associated therewith) for which access to the transport container 3 may be permitted. The updated access condition(s) may specify one or more geolocations at which access to the transport container 3 may be permitted in future. The updated access conditions may further specify one or more environmental conditions and/or one or more container status conditions which must be satisfied for access to be permitted.

In a step S53, the mobile communication device 7 transmits the updated access condition(s) to the cloud-based server 8, enabling the cloud-based server 8 to generate updated access conditions.

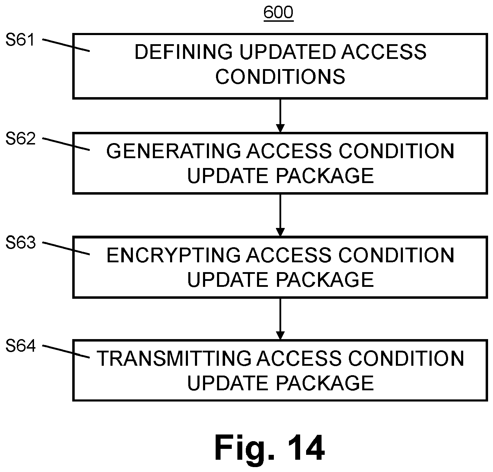

**Figure 14** shows a flow diagram illustrating a method 600 for generating updated access conditions in a cloud-based server 8 and transmitting the updated access conditions to the access control device 1. The method 600 includes a number of steps S61 - S64. The method 600 is performed, for example, subsequent to method 500.

In step S61, the cloud-based server 8 defines updated access conditions. The updated access conditions include an updated key authorization right, an updated geolocation condition, an updated environmental condition, and/or an updated container status condition. The updated access conditions may be defined using updated access conditions received in the cloud-based server 8 from the mobile communication device 7. The updated access conditions may also be defined using a pre-defined transport plan, which defines one or more authorized users (i.e. one or more authorized electronic key devices) and one or more geolocations, for example.

In step S62, the cloud-based server 8 generates an access condition update package including the updated access conditions.

In step S63, the cloud-based server 8 encrypts the access condition update package using a cryptographic key associated with, or stored in, the cloud-based server 8.

In step S64, the cloud-based server 8 transmits the encrypted access condition update package to the mobile communication device 7 via the communication network N. The mobile communication device 7 temporarily stores the encrypted access condition update package. It is important to note that the mobile communication device 7 cannot decrypt the encrypted access condition update package. The mobile communication device 7 then transmits the encrypted access condition update package to the access control device 1.

The access control device 1 then updates the access conditions, for example by performing method 200 described herein.

The above-described embodiments of the disclosure are exemplary and the person skilled in the art knows that at least some of the components and/or steps described in the embodiments above may be rearranged, omitted, or introduced into other embodiments without deviating from the scope of the present disclosure.

## Claims

1. An access control device (1) attachable to a transport container (3), the access control device (1) comprising:
an electronic circuit (11) comprising a processing unit (12), a memory (13) configured to store access conditions, a wireless communications module (14) configured for short-range communication, and an electronic communications interface (15), wherein the access control device (1) is configured to:
receive (S11), using the wireless communications module (14), from an electronic key device (2), an authorization query;
verify (S12), using key authorization rights included in the access conditions, the authorization query to determine whether the electronic key device (2) is authorized;
determine (S13) one or more of the following current parameters: a current geolocation of the access control device (1), a measured environmental parameter of the internal or external environment of the transport container (3), or current status information of the transport container (3);
verify (S14) whether the one or more current parameters satisfy the stored access conditions, the stored access conditions including one or more of:
a geolocation condition, an environmental condition, or a container status condition;
generate (S15) an access authorization signal upon affirmative verification of the authorization query and the current parameters; and
transmit, (S16) via the electronic communications interface (15), the access authorization signal to an actuator (16) for enabling physical access to contents of the transport container (3).

2. The access control device (1) according to claim 1, wherein the wireless communications module (14) is configured for short-range wireless communication using one or more of the following technologies: Bluetooth, RFID, NFC, or UWB.

3. The access control device (1) according to one of claims 1 to 2, wherein the processing unit (12) is configured to:
generate an alarm signal upon negative verification of the authorization query, the alarm signal including an identifier of the access control device (1) and an address of a cloud-based server (8);
transmit, using the wireless communications module (14), the alarm signal to the electronic key device (2), for forwarding to the cloud-based server (8) using the address.

4. The access control device (1) according to one of claims 1 to 3, further comprising a hardware secure element (17) connected to the processing unit (12) and configured to securely store a cryptographic key, wherein the processing unit (12) is further configured to:
receive (S21), using the wireless communications module (14), an encrypted access condition update package from a mobile communication device (7), the encrypted access condition update package generated by a cloud-based server (8) and forwarded to the mobile communication device (7), the encrypted access condition update package including updated access conditions;
decrypt (S22) the encrypted access condition update package using the cryptographic key stored securely in the hardware secure element (17); and
store (S23), in the memory (13), the received updated access conditions.

5. The access control device (1) according to claim 4, wherein the processing unit (12) is configured to transfer the encrypted access condition update package to the hardware secure element (17), wherein the hardware secure element (17) is configured to:
decrypt (S32) the encrypted access condition update package in the hardware secure element (17) using the cryptographic key stored securely in the hardware secure element (17), and
transfer (S33) the updated access conditions included in the access condition update package to the memory (13).

6. The access control device (1) according to one of claims 1 to 5, wherein the processing unit (12) is configured to determine the current geolocation using location information received, via the electronic communications interface (15), from a local positioning system (62).

7. The access control device (1) according to one of claims 1 to 6, wherein the processing unit (12) is configured to determine the current geolocation using location information received, via the wireless communications module (14), from the electronic key device (2).

8. The access control device (1) according to one of claims 1 to 7, wherein the access control device (1) further comprises a housing, the electronic circuit (11) being arranged inside the housing, wherein the access control device (1) is attached to the transport container (3) by a mounting apparatus attached to the housing and configured to permit the housing to be mechanically attached to a transport container (3).

9. The access control device (1) according to one of claims 1 to 8, wherein the access control device (1) comprises the actuator (16) and a locking mechanism and the actuator (16) is configured to unlock the locking mechanism.

10. The access control device (1) according to one of claims 1 to 9, wherein the access control device (1) is attached to the transport container (3) by being integrated into the transport container (3).

11. The access control device (1) according to one of claims 1 to 10, wherein the processing unit (12) is further configured to determine the current status information by receiving the container status information from a logistics management system.

12. The access control device (1) according to one of claims 1 to 11, wherein the processing unit (12) is further configured to:
receive (S41), using the wireless communications module (14), a broadcast message transmitted by a security control device;
generate (S42), in response to the broadcast message, a response message, wherein the respond message includes the current parameter(s); and
transmit (S43), the response message to the security control device using the wireless communications module (14).

13. A method for authorizing physical access to contents of a transport container (3), the physical access enabled by an access control device (1) attachable to a transport container (3), the access control device (1) comprising an electronic circuit (11), the electronic circuit (11) comprising a processing unit (12), a memory (13) configured to store access conditions, a wireless communications module (14) configured for short-range communication, and an electronic communications interface (15), wherein the method comprises:
receiving (S11), in the access control device (1) using the short-range wireless communications module (14), from an electronic key device (2), an authorization query;
verifying (S12), in the access control device (1) using key authorization rights included in the access conditions, the authorization query to determine whether the electronic key device (2) is authorized;
determining (S13), in the access control device (1), one or more of the following current parameters: a current geolocation of the access control device (1), a measured environmental parameter of the internal or external environment of the transport container (3), or current status information of the transport container (3);
verifying (S14), in access control device (1), whether the one or more current parameters satisfy the stored access conditions, the stored access conditions including one or more of: a geolocation condition, an environmental condition, and a container status condition;
generating (S15), in access control device (1), an access authorization signal upon affirmative verification of the authorization query and the current parameters; and
transmitting (S16), via the electronic communications interface (15), the access authorization signal to an actuator (16) for enabling physical access to contents of the transport container (3).

14. The method according to claim 13, wherein the access control device (1) further comprises a hardware secure element (17) connected to the processing unit (12), the hardware secure element (17) configured to securely store a cryptographic key, wherein the method further comprises:
receiving (S21), in the access control device (1) using the wireless communication module, an encrypted access condition update package from a mobile communication device (7), the encrypted access condition update package generated by a cloud-based server and forwarded to the mobile communication device (7), the encrypted access condition update package including updated access conditions;
decrypting (S22), in the processing unit (12), the encrypted access condition update package using the cryptographic key stored securely in the hardware secure element (17); and
storing (S23), in the memory (13), the received updated access conditions.

15. The method according to claim 14, wherein the method further comprises:
transmitting (S51), from the access control device (1) to mobile communication device (7), an access confirmation message, the access confirmation message including the access authorization signal and an identifier of the access control device (1);
receiving (S52), in the mobile communication device (7), user input via a user interface of the mobile communication device (7), the user input indicative of an updated access condition for the access control device (1);
transmitting (S53), from the mobile communication device (7) to the cloud-based server (8), the updated access condition, enabling the cloud-based server (9) to generate the encrypted access condition update package.

16. The method according to one of claims 14 or 15, the method further comprising:
defining (S61), in the cloud-based server (8), the updated access conditions, the updated access conditions including one or more of: an updated key authorization right, an updated geolocation condition, an updated environmental condition, or an updated container status condition;
generating (S62), in the cloud-based server (8), the access condition update package to include the updated access conditions;
encrypting (S63), in the cloud-based server (8) using a cryptographic key, the access condition update package; and
transmitting (S64), by the cloud-based server (8), the encrypted access condition update package, via a communication network (N), to the mobile communication device (7) for forwarding to the access control device (1).

17. A computer program product comprising computer program code which, when executed by a processing unit (12) of an access control device (1), in particular an access control device (1) according to one of claims 1 to 12, causes the access control device (1) to perform the method according to one of claims 13 to 16.
